# FASCICULE DE BREVET EUROPEEN

(11) **EP 0 665 623 B1**
(45) Date de publication et mention de la délivrance du brevet: **01.04.1998**
(21) Numéro de dépôt: 94402843.0
(22) Date de dépôt: 09.12.1994
(51) Int. Cl.: H02H 3/33, H01H 83/04

(54) **Dispositif de test pour interrupteur différentiel et interrupteur différentiel comportant ce dispositif**
Prüfeinrichtung für Differentialschutzschalter und diese Vorrichtung enthaltende Differentialschutzschalter
Test device for differential circuit breaker and differential circuit breaker containing the same

(30) Priorité: 27.01.1994 FR 9400893
(43) Date de publication de la demande: 02.08.1995
(73) Titulaire: HAGER ELECTRO S.A., F-67210 Obernai (FR)
(72) Inventeur: Roiatti, Jean-Marie, F-67210 Obernai (FR); Huck, Michel, F-67210 Obernai (FR)
(74) Mandataire: Bernasconi, Jean

(56) Documents cités:
- EP-A- 0 220 408
- US-A- 3 970 975

## Description

La présente invention a trait à un dispositif de test pour interrupteur différentiel ainsi qu'aux interrupteurs différentiels comportant un tel dispositif.

Un interrupteur différentiel est un appareil de coupure manuelle et automatique de protection, sensible au courant de fuite produit par les défauts d'isolement. Il permet la protection des personnes et des installations contre les risques découlant des défauts d'isolement et les risques d'électrisation par contact direct ou indirect de parties conductrices mises accidentellement sous tension.

De tels appareils, bien connus, comportent des moyens de détection de courants de défaut ou de fuite, tel qu'un tore de sommation, sur lequel sont bobinées des nombres identiques de spires primaires pour chacun des pôles de l'interrupteur différentiel, et des spires secondaires reliées à des moyens de déclenchement tel qu'un relais, agissant sur une serrure de mécanisme de fermeture des contacts de l'appareil. Généralement un circuit imprimé de mise en forme du signal détecté par les spires secondaires est prévu afin d'adresser aux moyens de déclenchement, tels que le relais, un signal efficace.

En fonctionnement normal la somme vectorielle des flux produits dans chaque enroulement primaire est nulle et aucune tension n'est induite dans l'enroulement secondaire. A l'apparition d'un courant de défaut, la somme vectorielle des flux n'est plus nulle, et une tension apparaît sur le secondaire, provoquant le déclenchement.

Les caractéristiques de déclenchement du relais dépendent principalement des surfaces polaires du circuit magnétique du dispositif de déclenchement, généralement constitué par une armature en U et une palette soumise à l'action d'un ressort. La qualité de ces surfaces polaires, ainsi que leur environnement immédiat peut varier en fonction de l'humidité, de la pollution, etc. de sorte que les valeurs de seuil, pour lesquelles le relais déclenche en entraînant l'ouverture des contact de l'interrupteur différentiel, peuvent varier avec le temps. Une augmentation du seuil de déclenchement empêche le déclenchement de se produire lorsqu'apparaîssent des courants de défaut classés comme dangereux, ce qui peut entraîner des dommages matériels et corporels importants.

Les normes en vigueur imposent que ces interrupteurs différentiels soient équipés d'un circuit de test capable de simuler un défaut d'isolement dans l'installation. Ce circuit de test comprend, en général, une dérivation sur l'un des conducteurs principaux, dérivation sur laquelle sont disposés en série une résistance et un interrupteur actionné par un organe de manoeuvre, également appelé bouton-test. L'utilisateur doit vérifier mensuellement, en appuyant sur le bouton-test, que l'appareil déclenche. Les interrupteurs différentiels sont installés dans les tableaux de distribution, chez les abonnés, à des endroits souvent peu accessibles ou visibles. De plus les utilisateurs de ces appareils sont généralement des personnes privées peu au fait des règles applicables à une installation électrique, et les installateurs, électriciens eux-mêmes, omettent souvent de mettre leurs clients au courant de ces règles. Il en résulte que, dans un grand nombre de cas, les utilisateurs ne respectent pas la périodicité mensuelle ou même ne procèdent pas du tout à des tests.

La présente invention se propose de remédier à ces inconvénients et d'accroître la sécurité apportée par les interrupteurs différentiels.

L'invention concerne un interrupteur différentiel, du type décrit ci-dessus, muni d'un moyen de détection de courant de défaut, par exemple un tore, et d'un organe de déclenchement sensible au courant de défaut, par exemple un relais, ledit appareil comprenant des moyens de test actionnés manuellement par un bouton-test de façon à simuler un courant de défaut lorsque l'utilisateur appuie sur ledit bouton et provoquer le déclenchement de l'appareil dès que ledit courant se trouve augmenté au-delà de la valeur rendant l'appareil sensible au courant de défaut simulé des moyens de test, caractérisés en ce qu'il comporte un circuit électronique compteur de temps, un moyen d'affichage, sensible audit circuit compteur de temps pour être mis en position active d'affichage lorsque un délai déterminé a été compté par le compteur de temps, et revenir en position inactive lorsque le compteur de temps est ramené dans son état initial, ledit circuit étant en outre sensible au déclenchement de l'interrupteur pour être ramené à son état initial de début de comptage.

L'invention a également pour objet un appareil auxiliaire destiné à être placé sur un tableau de bord d'abonné à proximité d'un interrupteur différentiel, ledit appareil auxilliaire étant caractérisé en ce qu'il comporte un tel circuit électronique compteur de temps, un tel moyen d'affichage, sensible audit circuit compteur de temps pour être mis en position active d'affichage lorsque un délai déterminé a été compté par le compteur de temps, et revenir en position inactive lorsque le compteur de temps est ramené dans son état initial, ledit circuit étant en outre sensible au déclenchement de l'interrupteur pour être ramené à son état initial de début de comptage.

Le circuit compteur de temps peut être un circuit électronique compteur d'heures usuel. De préférence ce compteur d'heures est agencé ou réglé de façon à venir actionner les moyens d'affichage lorsqu'une durée réglementaire, par exemple d'un mois, s'est écoulée. Ce compteur peut être alimenté à partir des conducteurs principaux de l'interrupteur mais on peut également, le cas échéant, prévoir une alimentation indépendante, par exemple sous forme de pile ou de batterie, permettant de compter le temps, même si l'interrupteur différentiel n'est pas sous tension.

Les moyens d'affichage sont de préférence de type électrique ou photo-électrique, par exemple un voyant lumineux ou une diode électroluminescente. Cependant ils peuvent également être réalisés sous forme mécanique, par exemple sous forme d'un voyant mécanique disposé à proximité du bouton test.

Les moyens d'alimentation du dispositif auxiliaire, ou des moyens selon l'invention intégrés dans l'interrupteur, peuvent être constitués d'un conducteur relié à un conducteur de phase de l'interrupteur et d'un autre conducteur relié à un conducteur de neutre de l'interrupteur, les liaisons étant agencées de façon que l'ouverture des contacts de l'interrupteur différentiel, en interrompant le courant dans le dispositif auxiliaire ou dans le circuit compteur de temps, provoque une réinitialisation du compteur qui recommencera le comptage dès qu'il aura à nouveau été mis sous tension.

Dans le cas où le voyant est constitué par une diode électroluminescente ou un voyant lumineux alimenté à partir de la tension aux bornes de l'interrupteur, l'ouverture des contacts de l'interrupteur provoque automatiquement l'extinction du voyant et, le compteur étant réinitialisé, le voyant ne se rallumera pas à la fermeture. Dans le cas où le voyant est un voyant mécanique il est préférable de le rendre solidaire de la partie mobile d'un actuateur électromagnétique, de façon à être remis en position inactive lors du déclenchement de l'interrupteur ou d'une ouverture de l'interrupteur, par exemple une ouverture manuelle.

D'autres avantages et caractéristiques de l'invention apparaîtront à la lecture de la description suivante, faite à titre d'exemple non limitatif, et se référant au dessin annexé, dans lequel :
- la figure 1 représente une vue schématique du circuit d'un appareil selon l'invention,
- la figure 2 représente une vue en perspective d'un interrupteur selon l'invention,
- la figure 3 représente une vue en perspective d'un appareil auxiliaire selon l'invention associé à un interrupteur différentiel.

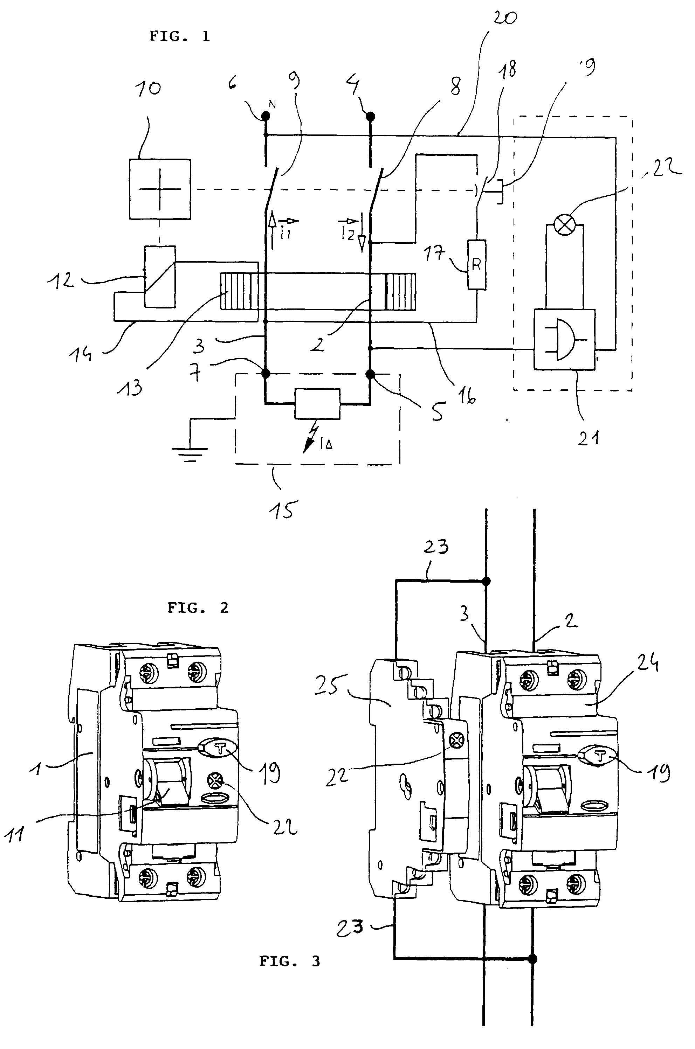

On se réfère tout d'abord aux figures 1 et 2.

L'interrupteur différentiel bipolaire représenté comporte, dans un boîtier 1, un circuit de phase 2 et un circuit de neutre 3, entre deux bornes 4, 5 respectivement 6,7, dont les vis de serrage apparaissent sur la figure 2. Dans chacun des deux circuits est interposé un contact mobile 8,9 coopérant avec un contact fixe respectif. Un mécanisme schématiquement représenté par 10 permet l'ouverture et la fermeture manuelle des contacts. On voit sur la figure 2 la manette 11 d'actionnement manuel du mécanisme 10. Ce mécanisme est, classiquement, du type à genouillère, c'est-à-dire applicant une forte pression de contact sur les interrupteurs lorsque le mécanisme a été amené dans sa position de fermeture ou blocage de genouillère, des moyens de déclenchement classiques étant associés au mécanisme à genouillère pour casser la genouillère et provoquer ainsi l'ouverture brutale des contacts mobiles 8,9 et, en conséquence, l'interruption de la continuité électrique dans les deux circuits 2,3. Ces moyens comprennent un relais 12 susceptible d'actionner, de façon connue, la genouillère pour déclencher l'ouverture des contacts. L'interrupteur comporte un tore ferromagnétique de détection 13 traversé par les deux circuits 2,3 (en général ces circuits tournent autour du tore pour former un nombre égal de spires primaires). Un enroulement secondaire 14 autour du tore est relié aux bornes du relais 12.

Tant qu'aucun défaut d'isolement ou autre fuite électrique ne se produit dans le circuit utilisateur représenté schématiquement par 15, les courants I1 et I2 passant dans les deux circuits principaux sont identiques en valeur absolue, et de sens contraire, de sorte que la somme des flux induits dans le tore 13 est nulle. S'il se produit un défaut d'isolement et, par conséquent, une fuite de courant, les deux courants I1 et I2 ne sont plus égaux en valeur absolue, de sorte que la composante d'induction dans le tore n'est plus nulle et génère un courant dans l'enroulement secondaire 14, qui forme un signal électrique de déclenchement pour le relais 12. A ce moment là le relais 12 déclenche le mécanisme 10 qui provoque l'ouverture des contacts 8,9.

L'interrupteur différentiel comporte, de façon classique, des moyens de test. Ces moyens de test comprennent une dérivation électrique 16 entre les deux circuits 2 et 3 avec une résistance 17 puis un contact mobile 18 normalement ouvert et susceptible d'être fermé par l'utilisateur lorsqu'il appuie sur un bouton-test 19. Dans ce cas la fermeture du contact 18 provoque un passage de courant dans le circuit de dérivation et la valeur de l'intensité I2 varie d'une quantité nominale définie par la valeur de la résistance R, et qui correspond à la valeur minimale de courant de défaut auquel le relais doit être sensible pour déclencher l'interrupteur et provoquer l'ouverture des contacts mobiles 8,9.

Conformément à la présente invention, l'interrupteur comporte encore, sur une dérivation 20 reliée d'une part à la borne 5 du circuit 2 et à la borne 6 du circuit 3, un circuit électronique compteur d'heures 21 dont la sortie est reliée à une diode électroluminescente de visualisation 22. Le circuit 21 est agencé, d'une façon en soi connue, pour provoquer l'alimentation et donc l'illumination de la diode 22 lorsque le nombre d'heures déterminé à l'avance a été compté. Ce nombre d'heures est, dans le cas présent, avantageusement fixé pour couvrir un mois.

En conséquence, en supposant l'interrupteur différentiel constamment en position de contact fermé, et alimenté par le réseau à partir des bornes 4,6, le compteur 21 déclenche, au bout d'un mois, l'alimentation de la diode 22 dont l'illumination, sur la face apparente du boîtier 1, incite l'utilisateur à procéder au test et à appuyer sur le bouton-test 19. Tant que l'utilisateur n'a pas appuyé sur le bouton-test 19, la diode 22 reste allumée. Lorsque l'utilisateur appuie sur le bouton-test et provoque le déclenchement, les contacts 8 et 9 sont ouverts. A ce moment le circuit de dérivation 20 cesse d'être sous tension et la diode 22 s'éteint tandis que le circuit compteur 21 se trouve rebasculé en position d'attente. Lorsque l'utilisateur réarme ensuite l'interrupteur différentiel par la manette 11, le circuit 20 est remis sous tension et le circuit compteur 21 est réinitialisé et se remet à compter pour provoquer l'alimentation de la diode 22 au bout d'un nouveau mois.

Si par contre l'action sur le bouton-test 19 ne s'est pas traduite par un déclenchement, la diode 22 reste allumée et l'attention de l'utilisateur reste attirée sur le fait que l'interrupteur présente une anomalie.

Dans la forme de réalisation qui vient d'être décrite, l'interrupteur différentiel comporte, de façon intégrée, les différents moyens 20, 21, 22.

En se référant à la figure 3 on voit un interrupteur différentiel 24 de type classique, avec son bouton-test mais ne présentant pas de moyen de visualisation 22 ni de circuit dérivé permettant la visualisation du temps écoulé.

On a représenté par 25 un boîtier modulaire d'un appareil auxiliaire, qui peut être fixé, sur le rail de fixation habituel de ce genre d'appareil, à côté de l'interrupteur différentiel 24, et à l'intérieur duquel se trouve disposé un circuit comprenant un compteur de temps tel que 21 susceptible d'alimenter, au bout d'un mois, la diode électroluminescente 22 apparaîssant sur la face antérieure du boîtier de l'appareil 25. Les bornes présentes aux deux extrémités du boîtier 25, qui permettent l'alimentation des composants dans le boîter, peuvent être reliées par les conducteurs de dérivation 23 au circuit de phase et au circuit de neutre à l'extérieur des bornes de l'interrupteur différentiel 24, de part et d'autre de l'interrupteur, de façon que l'alimentation soit coupée en cas de déclenchement de l'interrupteur.

## Revendications

1. Interrupteur différentiel, muni d'un moyen de détection de courant de défaut (13) et d'un organe de déclenchement (12) sensible au courant de défaut, ledit appareil comprenant des moyens de test (16, 17, 18) actionnés manuellement par un bouton-test (19) de façon à simuler un courant de défaut lorsque l'utilisateur appuie sur ledit bouton et provoquer le déclenchement de l'appareil dès que ledit courant se trouve augmenté au-delà de la valeur rendant l'appareil sensible au courant de défaut simulé des moyens de test, caractérisés en ce qu'il comporte un circuit électronique compteur de temps (21), un moyen d'affichage (22), sensible audit circuit compteur de temps pour être mis en position active d'affichage lorsque un délai déterminé a été compté par le compteur de temps (21), et revenir en position inactive lorsque le compteur de temps (21) est ramené dans son état initial, ledit circuit (21) étant en outre sensible au déclenchement de l'interrupteur pour être ramené à son état initial de début de comptage.

2. Appareil auxiliaire destiné à être placé sur un tableau de bord d'abonné à proximité d'un interrupteur différentiel, ledit appareil auxiliaire étant caractérisé en ce qu'il comporte un circuit électronique compteur de temps (21), un moyen d'affichage (22), sensible audit circuit compteur de temps (21) pour être mis en position active d'affichage lorsque un délai déterminé a été compté par le compteur de temps, et revenir en position inactive lorsque le compteur de temps est ramené dans son état initial, ledit circuit (21) étant en outre sensible au déclenchement de l'interrupteur pour être ramené à son état initial de début de comptage.

3. Dispositif selon l'une des revendications 1 et 2 caractérisé en ce que le circuit compteur de temps est un circuit électronique compteur d'heures.

4. Dispositif selon l'une des revendications 1 et 3, caractérisé en ce que les moyens d'affichage (22) sont de type électrique ou photo-électrique, notamment un voyant lumineux ou une diode électroluminescente.

5. Dispositif selon l'une des revendications 1 à 3 caractérisé en ce que lesdits moyens d'affichage sont des moyens mécaniques.

6. Dispositif selon l'une des revendications 1 à 5, caractérise par des moyens d'alimentation constitués d'un conducteur relié à un conducteur de phase de l'interrupteur et d'un autre conducteur relié à un conducteur de neutre de l'interrupteur, les liaisons étant agencées de façon que l'ouverture des contacts de l'interrupteur différentiel, en interrompant le courant, provoque une réinitialisation du compteur (21) qui recommencera le comptage dès qu'il aura à nouveau été mis sous tension.

## Patentansprüche

1. Differentieller Unterbrecher, der mit einem Fehlerstromermittlungsmittel (13) und einen Auslöseorgan (12) versehen ist, das auf den Fehlerstrom anspricht, wobei das Gerät Testmittel (16, 17, 18) aufweist, die durch eine Testtaste (19) manuell derart betätigt werden, daß ein Fehlerstrom simuliert wird, wenn der Nutzer die Taste drückt und die Auslösung des Geräts bewirkt wird, wenn dieser Strom größer ist als derjenige Wert, welcher das Gerät für den Fehlerstrom empfindlich macht, der durch die Testmittel simuliert ist, dadurch gekennzeichnet, daß er bzw. es eine elektronische Zeitzählerschaltung (21) aufweist, ein Anzeigemittel (22), das auf die Zeitzählerschaltung anspricht, um in eine aktive Anzeigestellung überführt zu werden, wenn eine vorbestimmte Zeitverzögerung durch den Zeitzähler (21) gezählt wurde, und in eine inaktive Stellung rückkehrt, wenn der Zeitzähler (21) in seinen anfänglichen Zustand rückgesetzt ist, wobei die Schaltung (21) außerdem auf die Auslösung des Unterbrechers anspricht, um in seinen Anfangszustand zum Starten des Zählens rückgesetzt zu werden.

2. Hilfsgerät, das dazu bestimmt ist, auf einem Teilnehmer-Instrumentenbrett in der Nähe eines differentiellen Unterbrechers angeordnet zu werden, wobei das Hilfsgerät dadurch gekennzeichnet ist, daß es eine elektronische Zeitzählerschaltung (21) aufweist, ein Anzeigemittel (22), das auf die Zeitzählerschaltung anspricht, um in eine aktive Anzeigestellung überführt zu werden, wenn eine vorbestimmte Zeitverzögerung durch den Zeitzähler (21) gezählt wurde, und in eine inaktive Stellung rückkehrt, wenn der Zeitzähler (21) in seinen anfänglichen Zustand rückgesetzt ist, wobei die Schaltung (21) außerdem auf die Auslösung des Unterbrechers anspricht, um in seinen Anfangszustand zum Starten des Zählens rückgesetzt zu werden.

3. Vorrichtung nach Anspruch 1 und 2, dadurch gekennzeichnet, daß die Zeitzählerschaltung eine elektronische Stundenzählerschaltung ist.

4. Vorrichtung nach einem der Ansprüche 1 bis 3, dadurch gekennzeichnet, daß die Anzeigemittel (22) vom elektrischen oder photoelektrischen Typ sind, insbesondere eine Leuchtanzeige oder eine Leuchtdiode.

5. Vorrichtung nach einem der Ansprüche 1 bis 3, dadurch gekennzeichnet, daß die Anzeigemittel mechanische Mittel sind.

6. Vorrichtung nach einem der Ansprüche 1 bis 5, gekennzeichnet durch Stromversorgungsmittel, die durch einen Leiter gebildet sind, der mit einem Phasenleiter des Unterbrechers verbunden ist, und einen weiteren Leiter, der mit einem neutralen Leiter des Unterbrechers verbunden ist, wobei die Verbindungen so ausgelegt sind, daß die Öffnung der Kontakte des differentiellen Unterbrechers unter Unterbrechung des Stroms eine erneute Initialisierung des Zählers (21) bewirkt, der den Zählvorgang erneut beginnt, bis er erneut unter Spannung gesetzt wird.

## Claims

1. Differential circuit breaker equipped with a means of detecting a fault current (13) and with a release unit (12) sensitive to the fault current, said apparatus comprising test means (16, 17, 18) manually actuated by a test button (19) so as to simulate a fault current when the user presses said button, and to cause release of the apparatus as soon as the said current is increased beyond the value rendering the apparatus sensitive to the fault current simulated by the test means, characterised in that it comprises an electronic time-counting circuit (21), a display means (22) sensitive to the said time-counting circuit in order to be placed in the active display position when a specific period of time has been counted by the time counter (21), and to revert to the inactive position when the time counter (21) is brought back into its initial state, said circuit (21) being in addition sensitive to release of the circuit breaker in order to be brought into its initial state at the start of counting.

2. Auxiliary apparatus intended to be placed on the control panel of a subscriber in the vicinity of a differential circuit breaker, the said auxiliary apparatus being characterised in that it comprises an electronic time-counting circuit (21), a display means (22) sensitive to the said time-counting circuit (21) in order to be placed in the active display position when a specific period of time has been counted by the time counter, and to revert to the inactive position when the time counter (21) is brought back into its initial state, said circuit (21) being in addition sensitive to release of the circuit breaker in order to be brought into its initial state at the start of counting.

3. Device according to claims 1 and 2, characterised in that the time-counting circuit is an electronic hour-counting circuit.

4. Device according to claims 1 and 3, characterised in that the display means (22) are of the electrical or photo-electric type, particularly a luminous window or an electroluminescent diode.

5. Device according to one of claims 1 to 3, characterised in that the said display means are mechanical means.

6. Device according to one of claims 1 to 5, characterised by supply means constituted by a conductor connected to a phase conductor of the circuit breaker and of another conductor connected to the neutral conductor of the circuit breaker, the connections being set out so that opening of the contacts of the differential circuit breaker interrupting the current, causes re-initialisation of the counter (21) which will recommence counting as soon as it again has voltage applied to it.
